# EUROPEAN PATENT APPLICATION

(11) **EP 3 680 278 A1**
(43) Date of publication of application: **15.07.2020**
(21) Application number: 18850956.6
(22) Date of filing: 29.08.2018
(51) Int. Cl.: C08J 5/04, B29C 64/118, B33Y 10/00, B33Y 80/00, B29K 105/14

(54) **SHAPED ARTICLE AND METHOD FOR PRODUCING SAME**

(30) Priority: 04.09.2017 JP 2017169257
(71) Applicant: Otsuka Chemical Co., Ltd., Osaka-shi, Osaka 540-0021 (JP)
(72) Inventor: INADA, Kousuke, Tokyo 101-0048 (JP); OKADA, Masagoro, Tokushima-shi Tokushima 771-0193 (JP)
(74) Representative: Ter Meer Steinmeister & Partner
(86) International application number: PCT/JP2018/031854
(87) International publication number: WO 2019/044864

(57) **Abstract**

Provided are a shaped article made of a fibrous filler-reinforced thermoplastic resin composition and capable of increasing mechanical properties and a method for producing the shaped article. The shaped article is made of a resin composition containing: inorganic fibers having an average fiber length of 1 µm to 300 µm and an average aspect ratio of 3 to 200; and a thermoplastic resin, and the inorganic fibers have an average orientation angle of 24° or lower.

## Description

### Technical Field

The present invention relates to shaped articles made of a thermoplastic resin composition containing inorganic fibers and methods for producing the shaped articles.

### Background Art

Thermoplastic resin compositions reinforced with a fibrous filler have excellent properties, such as mechanical properties and thermal resistance. Therefore, articles produced by injection-molding the thermoplastic resin compositions are used for many applications requiring high-precision quality, including automobile components, electric components, and optical equipment. However, injection molding exhibits different resin flow morphologies depending on the location in a mold cavity and, therefore, has difficulty in increasing fiber orientation. Low fiber orientation means that the resin is less likely to obtain the reinforcing effect from the fibrous filler and, therefore, the mechanical properties are less likely to be improved.

Meanwhile, shaping with a three-dimensional (3D) printer is known as a shaping method other than injection molding. The three-dimensional printer requires no mold assembly, which should be used in injection molding, enables the shaping of complicated 3D structures that could not be molded by injection molding, and has therefore recently received attention as a high-mix low-volume manufacturing technology. A three-dimensional printer is a technology to shape a 3D object by calculating the shapes of thin cross-sections from three-dimensional data input by a CAD or the like and depositing layer upon layer of a material based on the calculation results and is also referred to as additive manufacturing technology.

Various processes for three-dimensional printing materials (also referred to as additive manufacturing materials) are known. Among them, because of an advantage in cost, a material extrusion process (also referred to as a fused deposition modeling process) is widely used in which an article is shaped by fluidizing a thermoplastic resin having the shape of a string called a filament or other shapes with a heating device inside an extrusion head, then discharging the fluid resin through a nozzle onto a platform, and cooling the resin into a solid state while gradually depositing layer upon layer of it according to the cross-sectional shapes of a desired article to be shaped.

If the shaping is made using a thermoplastic resin not blended with any additive (so-called neat resin) on a fused deposition modeling-based three-dimensional printer, there arise problems including layer delamination of a shaped article and warpage of the shaped article. If a thermoplastic resin blended with a fibrous filler, such as glass fibers or carbon fibers, is used on the fused deposition modeling-based three-dimensional printer, there arises a problem of difficulty of shaping due to clogging of the extrusion head, wear of the extrusion head, and so on. Furthermore, it is said that if a thermoplastic resin is blended with an inorganic filler, interlayer fusion of a shaped article is blocked, which decreases the strength against layer delamination and in turn decreases the mechanical properties of the shaped article.

Patent Literature 1 discloses that with the use of a thermoplastic resin blended with a nanofiller, such as carbon nanotubes, a shaped article can be obtained which has a desired function that could not be achieved by a thermoplastic resin only.

### Citation List

### Patent Literature

Patent Literature 1: JP-A-2016-28887

### Summary of Invention

### Technical Problem

However, it is known that uniform dispersion of a nanofiller in a thermoplastic resin as in Patent Literature 1 is not easy and that the melting viscosity of an obtained thermoplastic resin composition increases. Furthermore, Patent Literature 1 discloses no specific method for improving the resistance to layer delamination of a shaped article and the resistance to warpage and shrinkage of the shaped article. Therefore, as shaped articles made by fused deposition modeling-based three-dimensional printers using thermoplastic resin compositions, those devised in terms of shaping pattern and so on and shaped using neat resin are prevalent in markets. Hence, these shaped articles have a problem of unsuitability for members requiring mechanical properties and microscopic and complex members.

An object of the present invention is to provide a shaped article made of a fibrous filler-reinforced thermoplastic resin composition and capable of increasing mechanical properties and a method for producing the shaped article.

### Solution to Problem

The present invention provides the following shaped article and method for producing the shaped article.
Aspect 1: A shaped article made of a resin composition containing: inorganic fibers having an average fiber length of 1 µm to 300 µm and an average aspect ratio of 3 to 200; and a thermoplastic resin, the inorganic fibers having an average orientation angle of 24° or lower.
Aspect 2: The shaped article according to aspect 1, wherein the inorganic fibers have a Mohs hardness of 5 or less.
Aspect 3: The shaped article according to aspect 1 or 2, wherein the inorganic fibers are at least one selected from the group consisting of potassium titanate and wollastonite.
Aspect 4: The shaped article according to any one of aspects 1 to 3, wherein a content of the inorganic fibers is 1% by mass to 40% by mass in a total amount of 100% by mass of the resin composition.
Aspect 5: The shaped article according to any one of aspects 1 to 4, wherein the thermoplastic resin is at least one selected from the group consisting of polyolefin resin, polystyrene-based resin, polyester-based resin, polyacetal (POM) resin, polycarbonate (PC) resin, aliphatic polyamide (PA) resin, semi-aromatic polyamide (PA) resin, polyphenylene sulfide (PPS) resin, polyether imide (PEI) resin, and polyether ether ketone (PEEK) resin.
Aspect 6: The shaped article according to any one of aspects 1 to 5, being a three-dimensional printed shaped article.
Aspect 7: The shaped article according to aspect 6, being a shaped article made by a fused deposition modeling-based three-dimensional printer.
Aspect 8: A method for producing the shaped article according to any one of aspects 1 to 7, the method including the step of shaping, with a fused deposition modeling-based three-dimensional printer, a filament having a resin composition containing: inorganic fibers having an average fiber length of 1 µm to 300 µm and an average aspect ratio of 3 to 200; and a thermoplastic resin.

### Advantageous Effects of Invention

The present invention enables provision of a shaped article made of a fibrous filler-reinforced thermoplastic resin composition and capable of increasing mechanical properties and a method for producing the shaped article.

### Brief Description of Drawings

[Fig. 1] Fig. 1 is a photograph showing a shaped article produced using a resin composition according to Comparative Example 3.
[Fig. 2] Fig. 2 is a photograph showing a shaped article produced using a resin composition according to Example 1.
[Fig. 3] Fig. 3 is a side view showing the shape of a tensile specimen.
[Fig. 4] Fig. 4 is a cross-sectional view showing the shape of a sliding ring specimen made by a three-dimensional printer.
[Fig. 5] Fig. 5 is a cross-sectional view showing the shape of a sliding ring specimen made by injection molding.
[Fig. 6] Fig. 6 is a schematic side view for illustrating the amount of warpage of flat-plate shaped articles measured in Examples and Comparative Examples.
[Fig. 7] Fig. 7 is a scanning electron micrograph at 5000-fold magnification showing a state of orientation of inorganic fibers in Example 11.
[Fig. 8] Fig. 8 is a scanning electron micrograph at 5000-fold magnification showing a state of orientation of inorganic fibers in Comparative Example 21.
[Fig. 9] Fig. 9 is a scanning electron micrograph at 5000-fold magnification showing a state of orientation of inorganic fibers in Comparative Example 22.

### Description of Embodiments

Hereinafter, a description will be given of an example of a preferred embodiment for working of the present invention. However, the following embodiment is simply illustrative. The present invention is not at all limited by the following embodiment.

A shaped article according to the present invention is a shaped article made of a resin composition containing: inorganic fibers having an average fiber length of 1 µm to 300 µm and an average aspect ratio of 3 to 200; and a thermoplastic resin, the inorganic fibers having an average orientation angle of 24° or lower.

The term "shaped article" used in the present invention includes a "shaped body", a "molded body", and a "molded article." When the orientation angle of the inorganic fibers is 24° or lower and preferably 20° or lower, the effect of reinforcing a matrix resin with the inorganic fibers can be produced at maximum, so that the shaped article can be given more excellent mechanical properties. In addition, the slidability (wear resistance) of a member made of the shaped article according to the present invention when sliding on another member is further increased. The reason for this can be attributed to the fact that the inorganic fibers are highly oriented and therefore less likely to drop off.

The orientation angle of inorganic fibers indicates the state of orientation of inorganic fibers in a shaped article. In the present invention, the orientation angle of inorganic fibers refers to, when a direction parallel to a spreading direction of a shaping material during shaping of a shaped article is defined as 0° and a direction perpendicular to the spreading direction during shaping is defined as 90°, the angle of a direction of the long axis of the inorganic fibers made with the spreading direction during shaping. Specifically, the orientation angle of inorganic fibers is defined as 0° when the inorganic fibers are oriented exactly in the spreading direction during shaping, the orientation angle thereof is defined as 45° when the inorganic fibers are not oriented relative to the spreading direction during shaping, and the orientation angle thereof is defined as 90° when the inorganic fibers are oriented perpendicular to the spreading direction during shaping. When a shaped article is a member shaped by injection molding, the spreading direction during shaping means a direction of resin flow.

The average orientation angle of the inorganic fibers can be obtained, for example, by taking an image of a shaped article with a scanning electron microscope (SEM), importing the scanned image into image processing software, arbitrarily selecting 300 inorganic fibers from the image imported in the image processing software, measuring the respective angles of the directions of long axes of the inorganic fibers made with the spreading direction during shaping of the shaped article, and dividing the sum of all the obtained angles by the number of inorganic fibers.

The shaped article according to the present invention is preferably a three-dimensional printed shaped article. Specifically, the shaped article is preferably a shaped article made by a fused deposition modeling-based three-dimensional printer. In this case, the orientation of inorganic fibers in the shaped article can be further increased, so that the mechanical properties of the shaped article can be further increased.

A description will be given below of components and so on of the shaped article according to the present invention.

### <Resin Composition>

The resin composition that is a constituent of the shaped article according to the present invention contains: inorganic fibers (A) having an average fiber length of 1 µm to 300 µm and an average aspect ratio of 3 to 200; and a thermoplastic resin (B) and may further contain other additives (C) as necessary.

### (Inorganic Fibers (A))

The inorganic fibers for use in the present invention are powder formed of fibrous particles and have an average fiber length of 1 µm to 300 µm and an average aspect ratio of 3 to 200. The average fiber length is preferably 1 µm to 200 µm, more preferably 3 µm to 100 µm, and still more preferably 5 µm to 50 µm. The average aspect ratio is preferably 3 to 100, more preferably 5 to 50, and still more preferably 8 to 40. The use of the inorganic fibers having the above average fiber length and average aspect ratio makes it easy to produce a shaped article and can improve, in shaping using a three-dimensional printer, the resistance to layer delamination of the shaped article, the resistance to warpage of the shaped article, and so on. Since the delamination strength of the shaped article is improved, the mechanical properties of the shaped article can be further increased.

The inorganic fibers for use in the present invention has, from the viewpoint of wear of an extrusion head, a Mohs hardness of preferably 5 or less, more preferably 1 to 5, and still more preferably 2 to 5. Examples of the type of the inorganic fibers include potassium titanate, wollastonite, aluminum borate, magnesium borate, xonotlite, zinc oxide, and basic magnesium sulfate. Preferred among the above various types of inorganic fibers is, from the viewpoint of mechanical properties, at least one selected from potassium titanate and wollastonite. The Mohs hardness is an index indicating the hardness of a substance, wherein when two different minerals are rubbed against each other, scratched one of them is a substance having a lower hardness.

Heretofore known potassium titanates can be widely used and examples include potassium tetratitanate, potassium hexatitanate, and potassium octatitanate. There is no particular limitation as to the dimensions of potassium titanate so long as they are within the above-described dimensions of the inorganic fibers. However, normally, its average fiber diameter is 0.01 µm to 1 µm, preferably 0.05 µm to 0.8 µm, and more preferably 0.1 µm to 0.7 µm, its average fiber length is 1 µm to 50 µm, preferably 3 µm to 30 µm, and more preferably 10 µm to 20 µm, and its average aspect ratio is 10 or more, preferably 10 to 100, and more preferably 15 to 35. In the present invention, even marketed products can be used and examples that can be used include "TISMO D" (average fiber length: 15 µm, average fiber diameter: 0.5 µm) and "TISMO N" (average fiber length: 15 µm, average fiber diameter: 0.5 µm) both manufactured by Otsuka Chemical Co., Ltd.

Wollastonite is inorganic fibers made of calcium metasilicate. There is no particular limitation as to the dimensions of wollastonite so long as they are within the above-described dimensions of the inorganic fibers. However, normally, its average fiber diameter is 0.1 µm to 15 µm, preferably 1 µm to 10 µm, and more preferably 2 µm to 7 µm, its average fiber length is 3 µm to 180 µm, preferably 10 µm to 100 µm, and more preferably 20 µm to 40 µm, and its average aspect ratio is 3 or more, preferably 3 to 30, and more preferably 5 to 15. In the present invention, even marketed products can be used and an example that can be used is "Bistal W" (average fiber length: 25 µm, average fiber diameter: 3 µm) manufactured by Otsuka Chemical Co., Ltd.

The above average fiber length and average fiber diameter can be measured by observation with a scanning electron microscope (SEM), and the average aspect ratio (average fiber length/average fiber diameter) can be calculated from the average fiber length and the average fiber diameter. For example, a plurality of inorganic fibers are taken with a scanning electron microscope (SEM), the images of 300 inorganic fibers are arbitrarily selected from the observed images of the plurality of inorganic fibers, and their fiber lengths and fiber diameters are measured. The average fiber length can be determined by dividing the sum of all the measured fiber diameters by the number of fibers, and the average fiber diameter can be determined by dividing the sum of all the measured fiber diameters by the number of fibers.

Fibrous particles as used in the present invention means particles having an L/B of 3 or more and an L/T of 3 or more where a length L represents the dimension of the longest side of, among cuboids (circumscribing cuboids) circumscribing the particle, a cuboid having the minimum volume, a breadth B represents the dimension of the second longest side of the cuboid, and a thickness T (B > T) represents the dimension of the shortest side of the cuboid. The length L and the breadth B correspond to the fiber length and the fiber diameter, respectively. Platy particles as used herein refer to particles having an L/B smaller than 3 and an L/T of 3 or more.

Regarding the inorganic fibers, in order to increase the wettability with the thermoplastic resin and further improve physical properties, such as mechanical properties, of the obtained resin composition, treated layers made of a surface treatment agent may be formed on the surfaces of inorganic fibers for use in the present invention. Examples of the surface treatment agent include silane coupling agents and titanium coupling agents. Preferred among them are silane coupling agents and more preferred are aminosilane coupling agents, epoxysilane coupling agents, vinylsilane coupling agents, and alkylsilane coupling agents. These agents may be used alone or as a mixture of two or more.

Examples of the aminosilane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, and N-(vinylbenzyl)-2-aminoethyl-3-aminopropyltrimethoxysilane.

Examples of the epoxysilane coupling agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, and 2-(3,4-epoxycyclohexyl)ethyltrimethoxysilane.

Examples of the vinylsilane coupling agents include vinyltrimethoxysilane, 3-methacryloxypropylmethyldimethoxysilane, 3-methacryloxypropyltrimethoxysilane, 3-methacryloxypropylmethyldiethoxysilane, and 3-methacryloxypropyltriethoxysilane.

Examples of the alkylsilane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, and n-decyltrimethoxysilane

Known surface treatment methods can be used as the method for forming treated layers made of a surface treatment agent on the surfaces of the inorganic fibers and examples include: a wet method of dissolving the surface treatment agent in a solvent promoting hydrolysis (for example, water, an alcohol or a mixed solvent of them) to prepare a solution and spraying the solution on the inorganic fibers; and an integral blend method of blending the inorganic fibers and the surface treatment agent with the resin composition.

No particular limitation is placed on the amount of surface treatment agent in treating the surfaces of the inorganic fibers according to the present invention with the surface treatment agent, but, in the case of the wet method, the solution of the surface treatment agent may be sprayed so that the amount of surface treatment agent reaches 0.1 parts by mass to 5 parts by mass and preferably 0.3 parts by mass to 2 parts by mass relative to 100 parts by mass of inorganic fibers. On the other hand, in the case of the integral blend method, the surface treatment agent may be blended with the resin composition so that the amount of surface treatment agent reaches 0.1 parts by mass to 20 parts by mass relative to 100 parts by mass of inorganic fibers. When the amount of surface treatment agent is within the above ranges, the adhesion of the inorganic fibers to the thermoplastic resin can be further increased to further improve the dispersibility of the inorganic fibers.

### (Thermoplastic Resin (B))

No particular limitation is placed on the type of the thermoplastic resin for use in the resin composition so long as it can be used in fused deposition modeling-based three-dimensional printers and has flow properties during melting that enable stable resin discharge without decreasing the head feed speed to be described later. Examples include: polyolefin resins, such as polypropylene (PP) resin, polyethylene (PE) resin, cyclic polyolefin (COP) resin, and cyclic olefin copolymer (COC) resin; polystyrene-based resins, such as polystyrene (PS) resin, syndiotactic polystyrene (SPS) resin, high-impact polystyrene (HIPS) resin, and acrylonitrile-butylene-styrene copolymer (ABS) resin; polyester-based resins, such as polylactic (PLA) resin, polyethylene terephthalate (PET) resin, and polybutylene terephthalate (PBT) resin; polyacetal (POM) resin; polycarbonate (PC) resin; aliphatic polyamide (PA) resins, such as polyamide 6 resin, polyamide 66 resin, polyamide 11 resin, polyamide 12 resin, polyamide 46 resin, polyamide 6 resin-polyamide 66 resin copolymer (polyamide 6/66 resin), and polyamide 6 resin-polyamide 12 resin copolymer (polyamide 6/12 resin); semi-aromatic polyamide (PA) resins composed of a structural unit with an aromatic ring and a structural unit free from aromatic ring, such as polyamide MXD6 resin, polyamide 6T resin, polyamide 9T resin, and polyamide 10T resin; polyphenylene sulfide (PPS) resin; polyether sulfone (PES) resin; liquid crystal polyester (LCP) resin; aromatic polyether ketone resins, such as polyether ketone (PEK) resin, polyether ether ketone (PEEK) resin, polyether ketone ketone (PEKK) resin, and polyether ether ketone ketone (PEEKK) resin; polyether imide (PEI) resin; polyamide-imide (PAI) resin; and thermoplastic polyimide (TPI) resin.

Preferred among the above thermoplastic resins are polyolefin resin, polystyrene-based resin, polyester-based resin, polyacetal (POM) resin, polycarbonate (PC) resin, aliphatic polyamide (PA) resin, semi-aromatic polyamide (PA) resin, polyphenylene sulfide (PPS) resin, polyether imide (PEI) resin, and polyether ether ketone (PEEK) resin.

Mixtures of at least two compatible thermoplastic resins selected from among the above thermoplastic resins, i.e., polymer alloys, or the like can also be used.

### (Other Additives (C))

The resin composition that is a constituent of the shaped article according to the present invention may contain other additives without impairing its preferred physical properties. Examples of the other additives include: an impact resistance improver; an inorganic filler other than the above-mentioned inorganic fibers (A), such as aramid fibers, polyphenylene benzoxazole (PBO) fibers, glass fibers, carbon fibers, alumina fibers, boron fibers, silicon carbide fibers, calcium carbonate, mica, sericite, illite, talc, kaolinite, montmorillonite, boehmite, smectite, vermiculite, titanium dioxide, silica, potassium titanate, potassium lithium titanate, boehmite, glass beads or alumina; a solid lubricant, such as polytetrafluoroethylene (PTFE), low-density polyethylene, linear low-density polyethylene, medium density polyethylene, high-density polyethylene, ultra-high molecular weight polyethylene or other polyethylene resins, graphite, molybdenum disulfide, tungsten disulfide or boron nitride; a thermal stabilizer, such as copper compound; a light stabilizer, such as hindered phenol-based light stabilizer; a nucleating agent; an antistat, such as anionic antistat, cationic antistat or non-ionic antistat; an anti-aging agent (antioxidant) ; a weatherproofer; a metal deactivator; a ultraviolet ray absorber, such as benzophenone-based ultraviolet ray absorber, benzotriazole-based ultraviolet ray absorber, triazine-based ultraviolet ray absorber or salicylate-based ultraviolet ray absorber; a germ- and mildew-proofing agent; a deodorant; a conductive additive, such as carbon-based conductive additive, metal-based conductive additive, metal oxide-based conductive additive or surfactant; a dispersant; a softener (plasticizer), such as polyester-based plasticizer, glycerin-based plasticizer, polycarboxylic acid ester-based plasticizer, phosphoric acid ester-based plasticizer, polyalkylene glycol-based plasticizer or epoxy-based plasticizer; a colorant, such as carbon black, titanium oxide or other pigments, or dye; a flame retardant, such as phosphazene-based compound, phosphoric acid ester, condensed phosphoric acid ester, inorganic phosphorous flame retardant, halogen-based flame retardant, silicone-based flame retardant, metal oxide-based flame retardant, metal hydroxide-based flame retardant, organometallic salt-based flame retardant, nitrogen-based flame retardant or boron compound-based flame retardant; an antidripping agent; a sound deadener; a neutralizer; an antiblocking agent; a flow modifier; a mold release agent, such as fatty acid or metal salt of fatty acid; and a lubricant. The resin composition may contain at least one of these additives.

Examples of the impact resistance improver include: olefin-based polymers, such as (ethylene and/or propylene)/α-olefin copolymer, (ethylene and/or propylene)/(α,β-unsaturated carboxylic acid and/or unsaturated carboxylic acid ester) copolymer or ionomer polymer; elastomers, such as styrene-based elastomer, urethane-based elastomer, fluorinated elastomer, vinyl chloride-based elastomer, polyester-based elastomer or polyamide-based elastomer; synthetic rubbers, such as Thiokol rubber, polysulfide rubber, acrylic rubber, silicone rubber, polyether rubber or epichlorohydrin rubber; and natural rubbers. Olefin-based rubbers are preferred in view of thermal resistance. The resin composition may contain at least one of these impact resistance improvers.

The above-mentioned (ethylene and/or propylene)/α-olefin copolymer is a polymer in which ethylene and/or propylene is copolymerized with α-olefin having three or more carbon atoms. Examples of the α-olefin having three or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 4-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, and various combinations of them. Alternatively, ethylene and/or propylene may be copolymerized with a polyene of a non-conjugated diene, such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene, methylene norbornene, 5-vinyl norbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene or 2-propenyl-2,2-norbornadiene.

The above-mentioned (ethylene and/or propylene)/(α,β-unsaturated carboxylic acid and/or unsaturated carboxylic acid ester) copolymer is a polymer in which ethylene and/or propylene is copolymerized with α,β-unsaturated carboxylic acid and/or unsaturated carboxylic acid ester monomer. Examples of the α,β-unsaturated carboxylic acid monomer include acrylic acid and methacrylic acid. Examples of the α,β-unsaturated carboxylic acid ester monomer include methyl esters, ethyl esters, propyl esters, butyl esters, pentyl esters, hexyl esters, heptyl esters, octyl esters, nonyl esters, decyl esters, and the like of the above unsaturated carboxylic acids, and various mixtures of them.

The above-mentioned ionomer polymer is a polymer in which at least some of the carboxyl groups of an olefin/α,β-unsaturated carboxylic acid copolymer are ionized by neutralization of metal ions. Ethylene is preferably used as the olefin and acrylic acid or methacrylic acid is preferably used as the α,β-unsaturated carboxylic acid. However, the olefin and α,β-unsaturated carboxylic acid to be used are not limited to those exemplified above and an olefin may be copolymerized with an unsaturated carboxylic acid ester monomer. Examples of the metal ion include: alkali and alkaline earth metals, such as Li, Na, K, Mg, Ca, Sr, and Ba; Al; Sn; Sb; Ti; Mn; Fe; Ni; Cu; Zn; and Cd.

The impact resistance improver can also be used in the form of a polymer modified with a carboxylic acid and/or its derivative. By the modification with the above component, for example, a functional group having affinity for polyamide resin can be introduced into the molecule of the polyamide resin. Examples of the functional group having affinity for polyamide resin include carboxylic acid group, carboxylic acid anhydride group, carboxylic acid ester group, metallic carboxylate group, carboxylic acid amide group, and epoxy group.

### (Method for Producing Resin Composition)

The resin composition can be produced by mixing and heating (particularly, melt-kneading) the inorganic fibers (A), the thermoplastic resin (B), and, as necessary, the other additives (C) .

For melt-kneading, any known melt kneader, for example, a biaxial extruder, can be used. Specifically, the resin composition can be produced by: (1) a method of preliminarily mixing the components with a mixer (a tumbler, a Henschel mixer or the like), melt-kneading the mixture with a melt kneader, and then pelletizing it with a pelletization device (such as a pelletizer) ; (2) a method of controlling a master batch of desired components, mixing it with other components as necessary, and melt-kneading the mixture into pellets with a melt kneader; (3) a method of feeding the components into a melt kneader to form pellets; or other methods.

No particular limitation is placed on the processing temperature during melt kneading so long as it is within a temperature range in which the thermoplastic resin (B) can melt. Normally, the cylinder temperature of a melt kneader for use in the melt kneading is controlled within this range.

The content of the inorganic fibers (A) in the resin composition is, in a total amount of 100% by mass of the resin composition, preferably 1% by mass to 40% by mass, more preferably 3% by mass to 30% by mass, and still more preferably 7% by mass to 25% by mass.

The content of the thermoplastic resin (B) in the resin composition is, in a total amount of 100% by mass of the resin composition, preferably 50% by mass to 99% by mass, more preferably 60% by mass to 97% by mass, and still more preferably 65% by mass to 93% by mass.

No particular limitation is placed on the content of other additives (C) which are additives except for the above-described essential components and allowed to be used in the present invention, without impairing the preferred physical properties of the resin composition. The content of the other additives is normally 10% by mass or less, preferably not more than 5% by mass and not less than 0.1% by mass, and more preferably not less than 1% by mass in a total amount of 100% by mass of the resin composition.

By controlling the components of the resin composition within the above respective ranges, the resistance to layer delamination of a shaped article, the resistance to warpage of the shaped article, and so on during shaping using a three-dimensional printer can be improved. Since the delamination strength of the shaped article is improved, the mechanical properties of the shaped article can be increased.

In this manner, the resin composition that is a constituent of the shaped article according to the present invention and exerts desired effects is produced.

### <Shaped Article and Production Method Therefor>

For the shaped article according to the present invention, the orientation of inorganic fibers in the shaped article can be further increased by forming the resin composition into a shape with a fused deposition modeling-based three-dimensional printer (also referred to as an additive manufacturing apparatus) under particular conditions.

The fused deposition modeling process is a process for shaping a desired shaped article by fluidizing a thermoplastic resin having the shape of pellets, the shape of a string called a filament or other shapes with a heating device inside an extrusion head, then discharging the fluid resin through a nozzle onto a platform, and cooling the resin into a solid state while gradually depositing layer upon layer of it. The use of the above resin composition as a shaping material enables shaping using a fused deposition modeling-based three-dimensional printer without clogging of the extrusion head or wear of the extrusion head that might occur with the use of a resin composition blended with a fibrous filler, such as glass fibers or carbon fibers. For example, even through a thin nozzle having a head diameter of 0.5 mm or less, shaping can be achieved without the occurrence of clogging of the extrusion head or wear of the extrusion head. In addition, it can be assumed that, although the reason is not clear, the inorganic fibers (A) can not only improve the resistance to warpage of the shaped article but also increase the interfacial strength between the deposited layers, thus preventing layer delamination of the shaped article.

No particular limitation is placed on the method for producing a filament and an example is a method including: an extrusion step of extruding the resin composition, which was produced by the above-described method, as a molten strand through a die hole in a molder and guiding the molten strand into a cooling water bath to obtain a strand; a stretching step of hot-stretching the strand to obtain a filament; and the step of rolling up the filament.

No particular limitation is placed on the shape of the filament. Examples that can be cited as the cross-sectional shape thereof include circular, rectangular, flattened, ellipsoidal, cocoon-like, trefoil, and like non-circular shapes. Circular is preferred from the viewpoint of ease of handling. No limitation is placed on the length of the filament and it can be set at any value according to industrial production conditions or without interfering with the use for a fused deposition modeling-based three-dimensional printer. No particular limitation is also placed on the diameter of the filament and, for example, it is 0.5 mm to 3 mm and particularly 1 mm to 2 mm. Note that the diameter of the filament refers to the maximum of diameters measured on cross-sections of the filament perpendicular to the direction of length of the filament.

The filament may be a composite filament in which the above resin composition is combined with another or other resin components . Examples of the cross-sectional structure of the composite filament include a radially oriented structure, a side-by-side structure, a sea-island structure, and a core-in-sheath structure.

In the method for producing a shaped article according to the present invention, a shaped article can be produced, for example, by feeding a filament made of the above resin composition into a fused deposition modeling-based three-dimensional printer. Specifically, a shaped article can be produced by feeding the filament into a fused deposition modeling-based three-dimensional printer, fluidizing the filament with a heating device inside an extrusion head, then discharging the fluid through a nozzle onto a platform, and cooling it into a solid state while gradually depositing layer upon layer of it according to the cross-sectional shape of a desired article to be shaped.

The printing speed (head feed speed) of the fused deposition modeling-based three-dimensional printer is, from the viewpoint of reduction in production time for the shaped article and the viewpoint of the orientation of inorganic fibers, preferably 20 mm/sec or higher and more preferably 30 mm/sec or higher. However, if the printing speed is too high, the shapability becomes poor. Therefore, the upper limit of the printing speed is normally 200 mm/sec or lower.

The diameter of the extrusion head is, from the viewpoint of head feed speed, preferably less than 0.5 mm, more preferably 0.4 mm or less, and still more preferably 0.3 mm or less, and preferably not less than 0.1 mm.

The temperature of molten resin discharged from the extrusion head (discharge temperature) can be appropriately selected depending on the thermoplastic resin for use in the printer so that the above head feed speed can be achieved.

It can be considered that when the head feed speed is controlled within the above range in the fused deposition modeling-based three-dimensional printer, strand-like resin is deposited layer upon layer in a specific direction while the inorganic fibers in the molten resin are oriented in a direction of discharge, so that the orientation of the inorganic fibers in the shaped article can be increased. Furthermore, since the shaped article is produced while strand-like resin discharged from the extrusion head is deposited layer upon layer in the specific direction, the direction of orientation of the inorganic fibers is less likely to vary from portion to portion of the shaped article. Particularly as for the shaped article according to the present invention, an excellent effect that would not be obtained by injection molding can be achieved in a shaped article having a maximum thickness of preferably 1 mm or more, more preferably 2 mm or more, and still more preferably 4 mm or more in a build-up direction during shaping and a minimum thickness of preferably 1 mm or more, more preferably 2 mm or more, and still more preferably 4 mm or more in the build-up direction during shaping.

Since the shaped article according to the present invention has a high degree of orientation of inorganic fibers, it has excellent mechanical properties and slidability. For this reason, the shaped article according to the present invention can be suitably used for structural members requiring mechanical properties, and automobile components (such as a bearing, a clutch sleeve bearing, a bearing retainer, and various gears), office automation equipment components (such as a sliding bearing, a separating pawl, and various gears), and electric and electronic equipment components (such as a vibration motor bearing) requiring not only mechanical properties but also slidability. Examples

Hereinafter, a specific description will be given of the present invention with reference to Examples and Comparative Examples, but the present invention is not limited to these examples. Details of raw materials used in Examples and Comparative Examples are as described below. The average fiber diameter and the average aspect ratio were measured using a field-emission scanning electron microscope (SEM, S-4800 manufactured by Hitachi High-Technologies Corporation), the shapes of particles were confirmed by the SEM with the exception of carbon black, the average particle diameter was measured with a laser diffraction particle size distribution measurement device (SALD-2100 manufactured by Shimadzu Corporation), and the average particle diameter of carbon black was measured using the SEM.

### (Inorganic Fibers)

Potassium titanate (trade name: TISMO D102, manufactured by Otsuka Chemical Co., Ltd., average fiber length: 15 µm, average fiber diameter: 0.5 µm, average aspect ratio: 30).

### (Thermoplastic Resin)

Polyamide 12 resin (trade name: DIAMID L1800, manufactured by Daicel-Evonik Ltd.);
Polyamide MXD6 resin (trade name: MXPA6000, manufactured by Mitsubishi Gas Chemical Company, Inc.);
PPS resin (trade name: DURAFIDE W214A, manufactured by Polyplastics Co., Ltd.); and
PEEK resin (trade name: PEEK 181G, manufactured by Victrex PLC) .

### (Other Additives)

Olefin-based polymer (maleic anhydride-modified ethylene/1-butene copolymer, trade name: TAFMER MH5020, manufactured by Mitsui Chemicals, Inc.);
Carbon black (trade name: #3050, manufactured by Mitsubishi Chemical Corporation, average particle diameter: 50 nm, amorphous-shaped particles); and
Talc (average particle diameter: 8 µm, platy particles).

### <Production of Resin Composition and Filament>

### (Filaments Nos. 1 to 8)

Materials were melt-kneaded in each composition ratio shown in Table 1 using a biaxial extruder, thus producing pellets. The cylinder temperature of the biaxial extruder was 190°C to 230°C for Filaments Nos. 1, 2, and 6 to 8, 230°C to 270°C for Filament No. 3, 280°C to 300°C for Filament No. 4, and 350°C to 380°C for Filament No. 5.

The obtained pellets were loaded into a filament extruder, thus obtaining a filament with a filament diameter of 1.7 mm.

**[Table 1]**

| Filament No. | | | 1 | 2 | 3 | 4 | 5 | 6 | 7 | 8 |
|---|---|---|---|---|---|---|---|---|---|---|
| Composition | Inorganic fibers | potassium titanate (% by mass) | 20 | 20 | 20 | 20 | 20 | | | |
| | Thermoplastic resin | polyamide 12 resin (% by mass) | 80 | 76 | | | | 100 | 95 | 90 |
| | | polyamide MXD6 resin (% by mass) | | | 80 | | | | | |
| | | PPS resin (% by mass) | | | | 80 | | | | |
| | | PEEK resin (% by mass) | | | | | 80 | | | |
| | Other additives | olefin-based polymer (% by mass) | | 4 | | | | | | |
| | | carbon black (% by mass) | | | | | | | 5 | |
| | | talc (% by mass) | | | | | | | | 10 |

### <Production of Shaped Article>

### (Examples 1 to 13 and Comparative Examples 1 to 22)

Each filament obtained in the above manner was produced into a flat-plate shaped article 100 mm long, 2 mm wide, and 50 mm thick by a fused deposition modeling-based three-dimensional printer under the associated printing conditions shown in Table 2. A fused deposition modeling-based three-dimensional printer manufactured by MUTOH INDUSTRIES, LTD. (trade name: MF1100) was used in Examples 1 to 3 and Comparative Examples 1 to 6 and a fused deposition modeling-based three-dimensional printer manufactured by MagnaRecta Co., Ltd. (trade name: Lepton2) was used in Examples 4 and 5 and Comparative Examples 7 and 8. The shaping was progressed in a vertical direction of the flat-plate shaped article and layers were deposited in a thickness direction thereof.

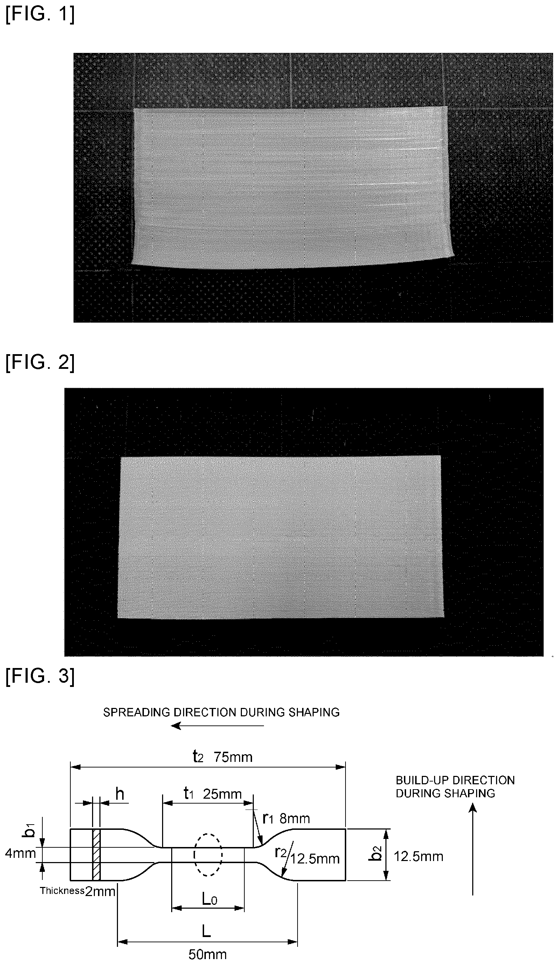

Fig. 1 shows a photograph of a shaped article (Comparative Example 3) produced using a resin composition shown as Filament No. 6 and Fig. 2 shows a photograph of a shaped article (Example 1) produced using a resin composition shown as Filament No. 1.

Each filament obtained in the above manner was produced into a dumbbell tensile specimen having a shape shown in Fig. 3 by a fused deposition modeling-based three-dimensional printer under the associated printing conditions shown in Table 3. A fused deposition modeling-based three-dimensional printer manufactured by MUTOH INDUSTRIES, LTD. (trade name: MF1100) was used in Examples 6 to 8 and Comparative Examples 9 to 14 and a fused deposition modeling-based three-dimensional printer manufactured by MagnaRecta Co., Ltd. (trade name: Lepton2) was used in Examples 9 and 10 and Comparative Examples 15 and 16. Furthermore, pellets made of each source material for filament shown in Table 4 were used and injection-molded through a gate provided so that the direction of resin flow coincides with the spreading direction during shaping in a three-dimensional printer, thus producing a dumbbell tensile specimen having a shape shown in Fig. 3.

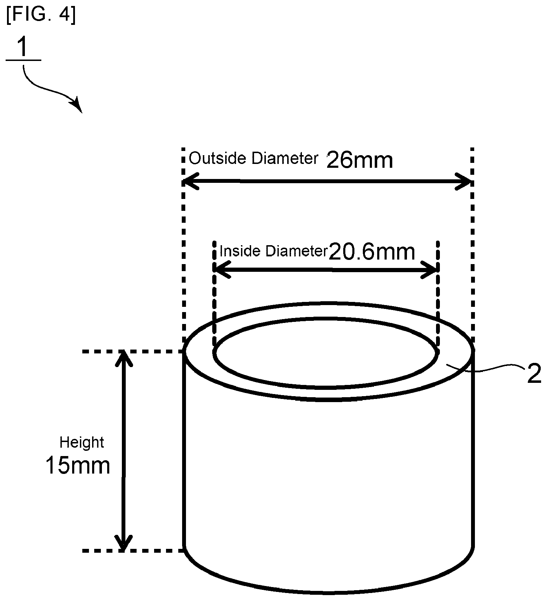

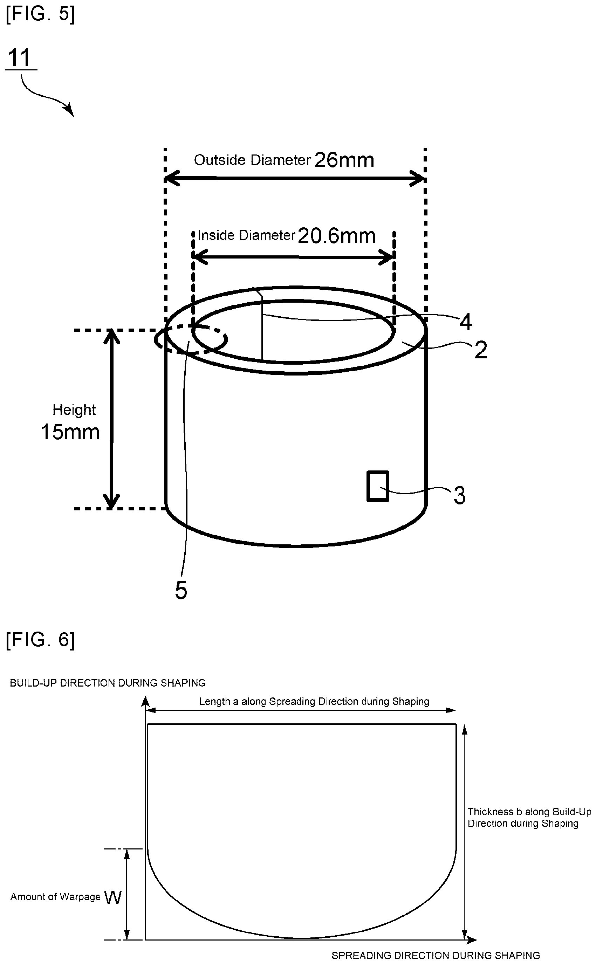

The filament obtained in the above manner was produced into sliding ring specimens 1 having a shape shown in Fig. 4 under different printing conditions shown in Table 5 by a fused deposition modeling-based three-dimensional printer manufactured by MUTOH INDUSTRIES, LTD. (trade name: MF1100). Furthermore, pellets made of a source material for filament shown in Table 6 were used and injection-molded through a gate 3 provided so that the direction of resin flow in a sliding test surface 2 coincides with the spreading direction during shaping in a three-dimensional printer, thus producing a sliding ring specimen 11 having a shape shown in Fig. 5.

The filaments obtained in the above manner were produced into respective IZOD specimens 64 mm long, 4 mm wide, and 12.7 mm thick under the printing conditions shown in Table 7 by a fused deposition modeling-based three-dimensional printer manufactured by MUTOH INDUSTRIES, LTD. (trade name: MF1100) . The shaping was progressed in a vertical direction of the IZOD specimen and layers were deposited in a thickness direction thereof.

### <Evaluations>

### (1) Amount of Warpage

The flat-plate shaped articles produced under the conditions in Table 2 were measured in terms of amount of warpage with a caliper. The amount of warpage W is, as shown in Fig. 6, a difference in height along a build-up direction during shaping between the middle and ends of the shaped article in a spreading direction during shaping. The results are shown in Table 2.

### (2) Shrinkage

The flat-plate shaped articles produced under the conditions in Table 2 were measured in terms of shrinkage. The shrinkage was measured in the build-up direction and the spreading direction. The shrinkage in the build-up direction is a shrinkage in the thickness b along the build-up direction during shaping shown in Fig. 6. The shrinkage in the spreading direction is a shrinkage in the length a along the spreading direction during shaping shown in Fig. 6. The results are shown in Table 2.

### (3) Interface Adhesion

The flat-plate shaped articles produced under the conditions in Table 2 were cut along the build-up direction into 10 mm-wide strips, the obtained strips were measured in terms of bending stress by a 30 mm-span three-point bending test with a tester Autograph AG-5000 (manufactured by Shimadzu Corporation), and the measured values were assumed as interface adhesions. The results are shown in Table 2.

### (4) Tensile Strength

The dumbbell tensile specimens produced under the conditions in Tables 3 and 4 were measured in terms of tensile strength with a tester Autograph AG-1 (manufactured by Shimadzu Corporation). The results are shown in Tables 3 and 4.

### (5) Orientation Angle of Inorganic Fibers

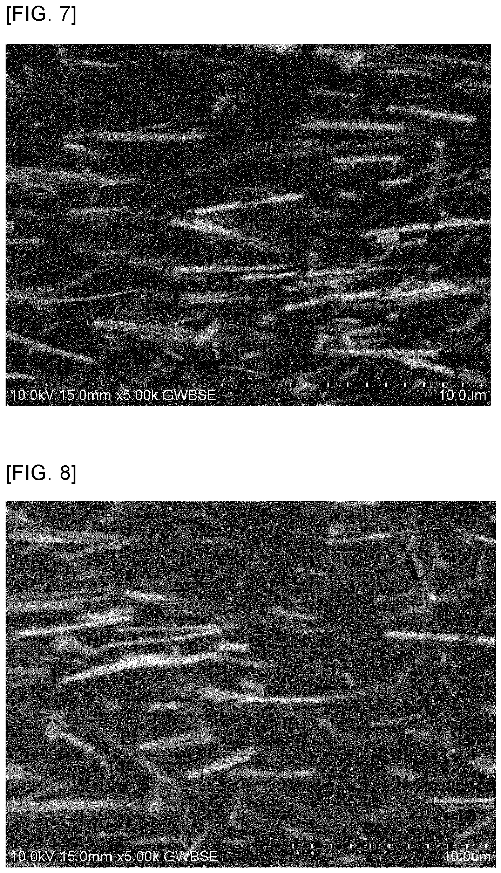

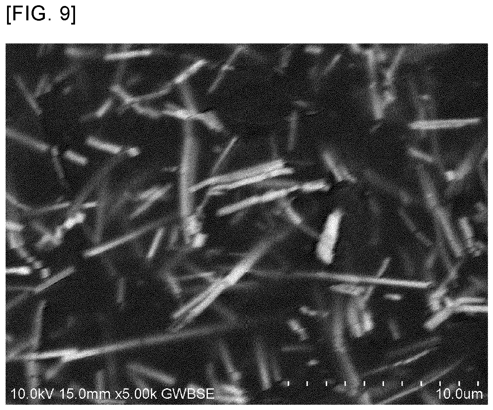

The dumbbell tensile specimens produced under the conditions in Tables 3 and 4 were measured in terms of orientation angle of inorganic fibers at a depth of 1 mm from their surface layers and the sliding ring specimens produced under the conditions in Tables 5 and 6 were measured in terms of orientation angle of inorganic fibers at a depth of 0.05 mm from their surface layers. As for the dumbbell tensile specimens, the orientation angle of inorganic fibers was measured at a depth of 1 mm from the surface layer in a location shown by the broken line in Fig. 3, i.e., in a central portion of each dumbbell tensile specimen in the length direction. As for the sliding ring specimens 1 produced by the three-dimensional printer, the orientation angle of inorganic fibers was measured at a depth of 0.05 mm from the surface layer in an arbitrary location of the sliding surface 2. As for the sliding ring specimen 1 produced by injection molding, the orientation angle of inorganic fibers was measured at a depth of 0.05 mm from the surface layer in a middle portion 5 of the sliding surface 2 shown in Fig. 5 between the gate 3 and a weld line 4 when the sliding surface 2 is viewed in plan. With each of the above measured portions placed like a specimen to bring the X-axis in line with the spreading direction during shaping, a composition contrast image of the surface of the obtained specimen was taken with a backscattered electron detector (BSE detector, manufactured by GW Electronics) using a scanning electron microscope (SEM, S-4800 manufactured by Hitachi High-Technologies Corporation). The magnification of the micrographs was 5000. As examples, Fig. 7 shows a scanning electron micrograph of the specimen in Example 11, Fig. 8 shows a scanning electron micrograph of the specimen in Comparative Example 21, and Fig. 9 shows a scanning electron micrograph of the specimen in Comparative Example 22.

The obtained images were subjected to image processing analysis using image analysis software (WinRoof 2015 manufactured by MITANI Corporation). Specifically, only fibrous substances were extracted from each image and transformed into binary images, and inorganic fibers were individually separated using needle shape separately measuring parameters and subjected to particle analysis to calculate the orientation angle of the inorganic fibers. The obtained orientation angle is an average value of the orientation angles of arbitrarily selected 3000 inorganic fibers.

### (6) Amount of Wear (Slidability)

The sliding ring specimens produced under the conditions shown in Tables 5 and 6 were measured in terms of amount of wear with a Suzuki-type friction and wear tester (EFM-III-F by A&D Company, Limited) . The friction and wear test was conducted under the conditions of a 0.5 MPa surface pressure, a 0.15 m/sec circumferential velocity, a three hours testing time, and a S45C countermember.

### (7) Notched IZOD Impact Value

The IZOD specimens produced under the conditions shown in Table 7 were measured in terms of notched IZOD impact value in conformity with JIS K7110.

The results are shown in Tables 2 to 7.

**[Table 2]**

| | | | Ex. 1 | Ex. 2 | Ex. 3 | Ex 4 | Ex. 5 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|---|---|---|---|
| Filament No. | | | 1 | 2 | 3 | 4 | 5 | 1 | 2 | 6 | 7 | 8 | 3 | 4 | 5 |
| Composition | potassium titanate (% by mass) | | 20 | 20 | 20 | 20 | 20 | 20 | 20 | | | | 20 | 20 | 20 |
| | polyamide 12 resin (% by mass) | | 80 | 76 | | | | 80 | 76 | 100 | 95 | 90 | | | |
| | polyamide MXD6 resin (% by mass) | | | | 80 | | | | | | | | 80 | | |
| | PPS resin (% by mass) | | | | | 80 | | | | | | | | 80 | |
| | PEEK resin (% by mass) | | | | | | 80 | | | | | | | | 80 |
| | olefin-based polymer (% by mass) | | | 4 | | | | | 4 | | | | | | |
| | carbon black (% by mass) | | | | | | | | | | 5 | | | | |
| | talc (% by mass) | | | | | | | | | | | 10 | | | |
| Shape of Shaped Article (3D Shaping) | | | flat-plate | flat-plate | flat-plate | flat-plate | flat-plate | flat-plate | flat-plate | flat-plate | flat-plate | flat-plate | flat-plate | flat-plate | flat-plate |
| 3D Shaping Conditions | | nozzle temperature (°C) | 250 | 250 | 250 | 300 | 380 | 250 | 250 | 210 | 250 | 250 | 250 | 300 | 380 |
| | | heated bed temperature (°C) | 30 | 30 | 30 | 30 | 30 | 30 | 30 | 30 | 30 | 30 | 30 | 30 | 30 |
| | | layer height (mnn) | 0.2 | 0.2 | 0.2 | 0.2 | 0.2 | 0.5 | 0.5 | 0.5 | 0.5 | 0.5 | 0.5 | 0.5 | 0.5 |
| | | head diameter (mm) | 0.2 | 0.2 | 0.2 | 0.2 | 0.2 | 0.5 | 0.5 | 0.5 | 0.5 | 0.5 | 0.5 | 0.5 | 0.5 |
| | | head feed speed (mm/sec) | 30 | 30 | 30 | 30 | 30 | 30 | 30 | 30 | 30 | 30 | 30 | 30 | 30 |
| Properties | | amount of (mm) | 0.2 | 0.2 | 0.3 | 0.4 | 0.4 | 0.3 | 0.3 | 3.1 | 3.0 | 1.9 | 0.3 | 0.5 | 0.4 |
| | | warpage shrinkage in build-up direction (%) | 0.02 | 0.03 | 0.09 | 0.10 | 0.12 | 0.02 | 0.04 | 0.64 | 0.54 | 0.43 | 0.09 | 0.11 | 0.13 |
| | | shrinkage in spreading direction (%) | 0.38 | 0.40 | 0.45 | 0.62 | 0.54 | 0.56 | 0.57 | 5.3 | 4.9 | 2.3 | 0.64 | 0.82 | 0.66 |
| | | interface adhesion (MPa) | 84 | 82 | 90 | 70 | 61 | 60 | 59 | 50 | 47 | 44 | 77 | 56 | 50 |

**[Table 3]**

| | | | Ex. 6 | Ex 7 | Ex. 8 | Ex. 9 | Ex. 10 | Comp. Ex | Comp Ex. 10 | Comp. Ex 11 | Comp. Ex. 12 | Comp. Ex. 13 | Comp. Ex 14 | Comp. Ex. 15 | Comp. Ex. 16 |
|---|---|---|---|---|---|---|---|---|---|---|---|---|---|---|---|
| Filament No. | | | 1 | 2 | 3 | 4 | 5 | 1 | 2 | 6 | 7 | 8 | 3 | 4 | 5 |
| Composition | potassium titanate (% by mass) | | 20 | 20 | 20 | 20 | 20 | 20 | 20 | | | | 20 | 20 | 20 |
| | polyamide 12 resin (% by mass) | | 80 | 76 | | | | 80 | 76 | 100 | 95 | 90 | | | |
| | polyamide MXD6 resin (% by mass) | | | | 80 | | | | | | | | 80 | | |
| | PPS resin (% by mass) | | | | | 80 | | | | | | | | 80 | |
| | PEEK resin (% by mass) | | | | | | 80 | | | | | | | | 80 |
| | olefin-based polymer (% by mass) | | | 4 | | | | | 4 | | | | | | |
| | carbon black (% by mass) | | | | | | | | | | 5 | | | | |
| | talc (% | | | | | | | | | | | 10 | | | |
| Shape of Shaped Article (3D Shaping) | | | dumbbell | dumbbell | dumbbell | dumbbell | dumbbell | dumbbell | dumbbell | dumbbell | dumbbell | dumbbell | dumbbell | dumbbell | dumbbell |
| 3D Shaing Conditions | | nozzle temperature (°C ) | 250 | 250 | 250 | 300 | 380 | 250 | 250 | 210 | 210 | 210 | 250 | 300 | 380 |
| | | heated bed temperature(°C) | 30 | 30 | 30 | 30 | 30 | 30 | 30 | 30 | 30 | 30 | 30 | 30 | 30 |
| | | 3D aye height (mm) | 0.1 | 0.1 | 0.1 | 0.1 | 0.1 | 0.2 | 0.2 | 0.2 | 0.2 | 0.2 | 0.2 | 0.2 | 0.2 |
| | | head diameter (mm) | 0.2 | 0.2 | 0.2 | 0.2 | 0.2 | 0.5 | 0.5 | 0.5 | 0.5 | 0.5 | 0.5 | 0.5 | 0.5 |
| | | head feed speed (mm/sec) | 30 | 30 | 30 | 30 | 30 | 30 | 30 | 30 | 30 | 30 | 30 | 30 | 30 |
| Properties | | tensile strength (MPa) | 90 | 82 | 130 | 113 | 118 | 74 | 63 | 57 | 43 | 50 | 107 | 98 | 92 |
| | | orientation angle (°) | 17 | 16 | 18 | 20 | 16 | 25 | 27 | - | - | - | 28 | 25 | 26 |

**[Table 4]**

| | | | Comp. Ex. 17 | Comp. Ex. 18 | Comp. Ex. 19 | Comp. Ex. 20 |
|---|---|---|---|---|---|---|
| Composition | potassium titanate (% by mass) | | 20 | 20 | | 20 |
| | polyamide 12 resin (% by mass) | | 80 | 76 | 100 | |
| | polyamide MXD6 resin (% by mass) | | | | | 80 |
| | olefin-based polymer (% by mass) | | | 4 | | |
| Shape of Shaped Article (Injection Molding) | | | dumbbell | dumbbell | dumbbell | dumbbell |
| Properties | | tensile strength (MPa) | 75 | 62 | 55 | 115 |
| | | orientation angle (° ) | 43 | 40 | | 48 |

**[Table 5]**

| | | | Ex. 11 | Comp. Ex. 21 |
|---|---|---|---|---|
| Filament No. | | | 1 | 1 |
| Composition | potassium titanate (% by mass) | | 20 | 20 |
| | polyamide 12 resin (% by mass) | | 80 | 80 |
| Shape of Shaped Article (3D Shaping) | | | ring | ring |
| 3D Shaping Conditions | | nozzle temperature (°C) | 250 | 250 |
| | | heated bed temperature (°C) | 30 | 30 |
| | | layer height (mm) | 0.1 | 0.2 |
| | | head diameter (mm) | 0.2 | 0.5 |
| | | head feed speed (mm/sec) | 30 | 30 |
| Properties | | amount of wear (mm³/kgf▪km) | 0.25 | 0.32 |
| | | orientation angle (° ) | 17 | 25 |

**[Table 6]**

| | | | Comp. Ex. 22 |
|---|---|---|---|
| Composition | potassium titanate (% by mass) | | |
| | polyamide 12 resin (% by mass) | | 80 |
| Shape of Shaped Article (Injection Molding) | | | ring |
| Properties | | amount of wear (mm³/kgf▪ km) | 0.35 |
| | | orientation angle (° ) | 43 |

**[Table 7]**

| | | | Ex. 12 | Ex. 13 |
|---|---|---|---|---|
| Filament No. | | | 1 | 2 |
| Composition | potassium titanate (% by mass) | | 20 | 20 |
| | polyamide 12 resin (% by mass) | | 80 | |
| | olefin-based polymer (% by mass) | | | 4 |
| Shape of Shaped Article (3D Shaping) | | | IZOD | IZOD |
| 3D Shaping Conditions | | nozzle temperature (°C) | 250 | 250 |
| | | heated bed temperature (°C) | 30 | 30 |
| | | layer height (mm) | 0.2 | 0.2 |
| | | head diameter (mm) | 0.2 | 0.2 |
| | | head feed speed (mm/sec) | 30 | 30 |
| Properties | | IZOD (J/m) | 78 | 95 |

As is obvious from Table 2, it can be seen that Example 1 in which inorganic fibers according to the present invention were blended with polyamide 12 resin exhibited significantly low amount of warpage and significantly low shrinkages both in the build-up direction and spreading direction as compared to Comparative Examples 3 to 5 in which no inorganic fibers according to the present invention were blended with polyamide 12 resin. Furthermore, it can be seen that the interface adhesion was significantly improved.

As is obvious from comparison of Comparative Example 3 with Comparative Examples 4 and 5, the addition of an inorganic additive, such as carbon black or talc, into a thermoplastic resin generally decreases the interface adhesion. However, comparison of Example 1 with Comparative Example 3 shows that the addition of the inorganic fibers according to the present invention into a thermoplastic resin offered an unforeseen effect of increased interface adhesion.

Furthermore, as is obvious from Tables 3 and 4, it can be seen that Example 6 in which the orientation angle of inorganic fibers was lower than 24° exhibited a greater tensile strength as compared to Comparative Examples 9 and 17 in which the orientation angle of inorganic fibers was higher than 24°.

Moreover, as is obvious from Tables 5 and 6, it can be seen that Example 11 in which the orientation angle of inorganic fibers was lower than 24° exhibited a smaller amount of wear as compared to Comparative Examples 21 and 22 in which the orientation angle of inorganic fibers was higher than 24°.

### Reference Signs List

- 11: sliding ring specimen
- 2: sliding surface
- 3: gate
- 4: weld line
- 5: middle portion

## Claims

1. A shaped article made of a resin composition containing: inorganic fibers having an average fiber length of 1 µm to 300 µm and an average aspect ratio of 3 to 200; and a thermoplastic resin, the inorganic fibers having an average orientation angle of 24° or lower.

2. The shaped article according to claim 1, wherein the inorganic fibers have a Mohs hardness of 5 or less.

3. The shaped article according to claim 1 or 2, wherein the inorganic fibers are at least one selected from the group consisting of potassium titanate and wollastonite.

4. The shaped article according to any one of claims 1 to 3, wherein a content of the inorganic fibers is 1% by mass to 40% by mass in a total amount of 100% by mass of the resin composition.

5. The shaped article according to any one of claims 1 to 4, wherein the thermoplastic resin is at least one selected from the group consisting of polyolefin resin, polystyrene-based resin, polyester-based resin, polyacetal (POM) resin, polycarbonate (PC) resin, aliphatic polyamide (PA) resin, semi-aromatic polyamide (PA) resin, polyphenylene sulfide (PPS) resin, polyether imide (PEI) resin, and polyether ether ketone (PEEK) resin.

6. The shaped article according to any one of claims 1 to 5, being a three-dimensional printed shaped article.

7. The shaped article according to claim 6, being a shaped article made by a fused deposition modeling-based three-dimensional printer.

8. A method for producing the shaped article according to any one of claims 1 to 7, the method comprising the step of shaping, with a fused deposition modeling-based three-dimensional printer, a filament having a resin composition containing: inorganic fibers having an average fiber length of 1 µm to 300 µm and an average aspect ratio of 3 to 200; and a thermoplastic resin.
